# EUROPÄISCHE PATENTANMELDUNG

(11) **EP 2 269 955 A1**
(43) Veröffentlichungstag der Anmeldung: **05.01.2011**
(21) Anmeldenummer: 10401080.6
(22) Anmeldetag: 14.06.2010
(51) Int. Cl.: C02F 1/30, B02B 7/00, H05B 6/80

(54) **Vorrichtung und Verfahren zur Trennung von gelösten und festen Stoffen in wässrigen Lösungen**

(30) Priorität: 16.06.2009 DE 102009025976
(71) Anmelder: Thomomat AS, 3711 Skien (NO); Thom, Dieter, 01259 Dresden (DE)
(72) Erfinder: Thom, Dieter, 01259 Dresden (DE)
(74) Vertreter: Weissfloh, Ingo

(57) **Zusammenfassung**

Aufgabe der Erfindung ist es, ein Verfahren und die dazugehörige Vorrichtung zu schaffen, um Altöle zu entwässern, die Reinigung von Rohren, Boilern und Behältern, die durch Öl-Wasser-Emulsionen verschmutzt sind, zu ermöglichen und gleichzeitig in bestehenden Wasseranlagen vorhandene Kalk- und Rostablagerungen und andere Inkrustationen in den Rohren und anderen Anlagenteilen sicher und kostengünstig abzubauen.

Hierzu wird ein spezielles gläsernes Erregergefäß 1 benutzt, an dessen Boden ein Magnetron 2 angeordnet ist, welches mit seinen Mikrowellen in das Innere des Erregergefäßes 1 strahlt. Durch die besondere Gestaltung eines im oberen Bereich des Erregergefäßes 1 angeordneten Metallrohres 4 wird im Betrieb der Vorrichtung im oberen Bereich des Erregergefäßes 1 eine Gas-Wasserdampfglocke erreicht. Der Gaswaserdampf wird über die Rohre 4 und 8 in das Behandlungssystem 14 geführt und bedingt dort z. B. eine Trennung von Wasser und Öl.

Die Erfindung wird zur Trennung von gelösten und festen Stoffen in wässrigen Lösungen, z. B. Trennung von Wasser aus Altöl, genutzt.

## Beschreibung

Vorrichtung und Verfahren zur Trennung von gelösten und festen Stoffen in wässrigen Lösungen insbesondere zur Ölentwässerung und Reinigung von Boiler und anderen Behältern.

Eine Trennung von Öl-Wasser-Emulsionen mittels Zentrifugentechnik wird in der DE 10 2004 044 543 beschrieben.

Auch die Bestrahlung mittels Strahlenquellen, wie in der DE 195 26 792 beschrieben, ist bereits bekannt. Hier wird allerdings eine biologische Verockerung durch die Bestrahlung verhindert.

In der DE 39 200 46 wird für die Rohrreinigung mittels intermittierender Druckstöße eines pulsierenden Wasser-LuftGemisches genutzt.

Alle diese Vorrichtungen und Anlagen sind in der Anschaffung sehr teuer und arbeiten mit Füllmengen, die die Rentabilität beeinflussen.

Aufgabe der Erfindung ist es, ein Verfahren und die dazugehörige Vorrichtung zu schaffen, um Altöle zu entwässern, die Reinigung von Rohren, Boilern und Behältern, die durch Öl-Wasser-Emulsionen verschmutzt sind, zu ermöglichen und gleichzeitig in bestehenden Wasseranlagen vorhandene Kalk- und Rostablagerungen und andere Inkrustationen in den Rohren und anderen Anlagenteilen sicher und kostengünstig abzubauen und eine Lösungstrennung fester Stoffe in wässrigen Lösungen zu ermöglichen.

Die mit der Erfindung erzielbaren Vorteile bestehen insbesondere darin, dass mittels einer Vorrichtung, die an die zu reinigende Wasseranlage angeschlossen wird, auf chemisch-physikalischem Weg eine Trennung von Öl und Wasser, Kohlenwasserstoffe aus Lösungen zu entfernen und einen Abbau der vorhandenen Inkrustationen ohne Zusatz von chemischen Mitteln zu ermöglichen. Wasseranlagen können beim Betrieb der Vorrichtung weiterhin genutzt werden. Die Vorrichtung wird nach Abschluss der Reinigungsarbeiten wieder von der Anlage abgebaut. Sie wird also nur zeitweilig in den entsprechenden Anlagen eingesetzt. Durch einen verhältnismäßig einfachen Aufbau der Vorrichtung ist diese nicht teuer. Damit kann z. B. ein preiswertes Verfahren zur Entfernung von Wasser aus Altöl oder die Reinigung von Wasserleitungsrohren oder Behältern in Industrieanlagen angeboten werden. Weiterhin kann die Vorrichtung zur Trennung von festen Stoffen in wässrigen Lösungen genutzt werden, wie z. B. die Herauslösung von Eisen aus Siliziumcarbis-Schlamm-Emulsionen.

Vorteilhafte Ausgestaltungen der erfindungsgemäßen Vorrichtung sind in den Ansprüchen 2 und 3 angegeben. Bei der Weiterbildung nach Anspruch 2 sind die Kontakte vergoldet. Hierdurch verbessern sich die Kontakteigenschaften und die Qualität der Vorrichtung verbessert sich wesentlich. Nach Anspruch 3 besitzt die Behandlungsanlage ein Analysegerät zur Bestimmung der Zusammensetzung der wässrigen Lösung. Die Messergebnisse können dem PC der Vorrichtung übermittelt werden, der wiederum die Messergebnisse auswertet und über das Schaltsystem eine Steuerung des Magnetrons realisiert.

Ein Ausführungsbeispiel der Erfindung wird in der Zeichnung dargestellt und im folgenden näher beschrieben.

Es zeigen
Fig. 1 den Prinzipaufbau der erfindungsgemäßen Vorrichtung,

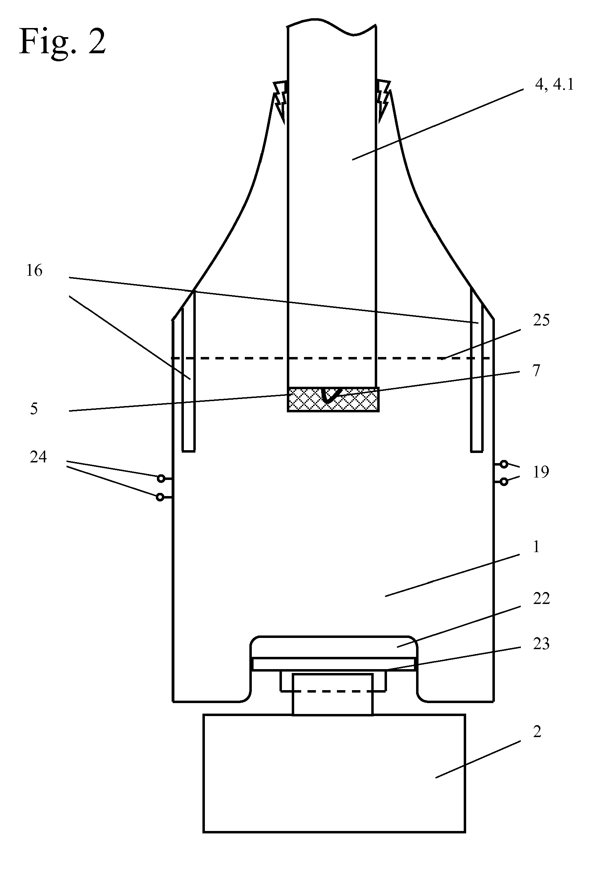

Fig. 2 das Erregergefäß mit dem Magnetron und seinen Anschlüssen im Schnitt und

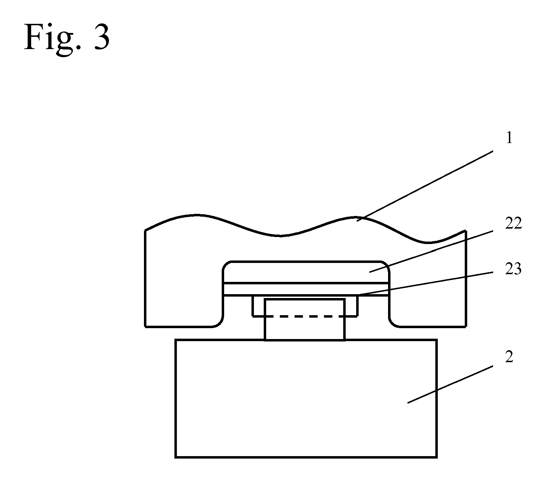

Fig. 3 einen Ausschnitt des Erregergefäßes mit Magnetron und Schirm in der Einstülpung.

Die erfindungsgemäße Vorrichtung besteht in einer Vorzugsvariante aus einem gläsernen, flaschenförmigen Erregergefäß 1, dessen Boden nach Innen gewölbt ist und somit eine Einstülpung 22 besitzt. In diese Einstülpung 22 greift ein Magnetron 2 mit seinem Strahlungsausgang mit einer Leistungsaufnahme von 500 W ein. Die Austrittsöffnung der Mikrowellen des Magnetron 2 ist also in Richtung Erregergefäß 1 gerichtet. Um den Strahlungsausgang des Magnetrons 2 ist ein Schirm 23 angeordnet. Dieser Schirm 23 füllt den gesamten Zwischenraum zwischen Magnetron 2 und der Einstülpung 22 völlig aus.

Das Erregergefäß 1 ist insgesamt durch ein Metallgehäuse (in der Zeichnung nicht dargestellt) abgeschirmt. Damit wird die Strahlung des Magnetrons 2 in die Umgebung der Vorrichtung vermieden. Das Magnetron 2 ist an ein elektrisches Schaltsystem 3 mit einem Transformator, Kondensator, Lüfter, Schalter und Sicherungen angeschlossen und verkabelt. Die elektrische Speisung erfolgt über ein externes Stromnetz.

Die elektrische Verkabelung des Magnetrons 2 mit den anderen Bauteilen, wie Transformator usw., erfolgt ähnlich wie bei den handelsüblichen Mikrowellen. Die einzelnen elektrischen Bauteile sind elektrisch und thermisch abgesichert. Dies kann z. B. durch Thermomikroschalter erfolgen.

Das Schaltsystem 3 wird von einem PC 21 gesteuert. Dieser PC 21 besitzt Signalleitungen zu allen Ventilen 9, 11, 13 und 18 der Vorrichtung und zu den Kontakten 19 und 24 des Erregergefäßes 1 Steuerleitungen. Außerdem besteht eine Verbindung zu einem Analysegerät der Behandlungsanlage 14 zur Bestimmung der Zusammensetzung der wässrigen Lösung. Die Messergebnisse dieses Analysegerätes werden zum PC 21 übertragen, dort ausgewertet und damit über das Schaltsystem 3 eine Steuerung des Magnetrons 2 realisierbar.

An der Oberseite des Erregergefäßes 1 ragt ein Kupferrohr 4 bis in das Innere des Erregergefäßes 1 hinein. Dabei ist das Rohr 4 zum und am Erregergefäß 1 abgedichtet.

Das Ende dieses Kupferrohres 4 ist doppelwandig ausgeführt, d. h. innerhalb des Kupferrohrendes ist mittig ein weiteres inneres Kupferrohr 6 mit einem kleineren Durchmesser angeordnet. Das untere Ende des inneren Kupferrohres 6 endet vor dem Ende des äußeren Kupferrohres 4. Das innere Kupferrohr 6 trägt eine Silberantenne 7. Diese Silberantenne 7 ist mit ihren Enden an den Innenseiten des inneren Kupferrohres 6 befestigt und ragt mit einer Schlaufe bis über das Ende des äußeren Kupferrohres 4 hinaus. Das obere Ende des inneren Kupferrohres 6, also in Richtung Oberseite des Erregergefäßes 1, besitzt eine ringförmige, wasserdichte Verbindung aus Kupfer zum äußeren Kupferrohr 4. Am Ende des äußeren Kupferrohres 4 befindet sich am gesamten Umfang ein Edelstahlgitter 5. Dieses Edelstahlgitter 5 kann innen oder außen am Kupferrohr 4 befestigt sein und überragt das Rohrende des Kupferrohres 4.

Das Kupferrohr 4 ist am Ende außerhalb des Erregergefäßes 1 mit einem flexiblen Rohr 8, im Ausführungsbeispiel mit einem Panzerschlauch, verbunden. Dieses flexible Rohr 8 führt über ein Rückschlagventil 9 und eine Pumpe 15 mit ebenfalls einem Rückschlagventil zu der Behandlungsanlage 14. Durch diese zwei Rückschlagventile ist eine doppelte Sicherheit gegeben. Das flexible Rohr 8 ist dabei über ein Ventil (in der Zeichnung nicht dargestellt), über Rohrstutzen oder ähnliches mit der Behandlungsanlage 14 verbunden.

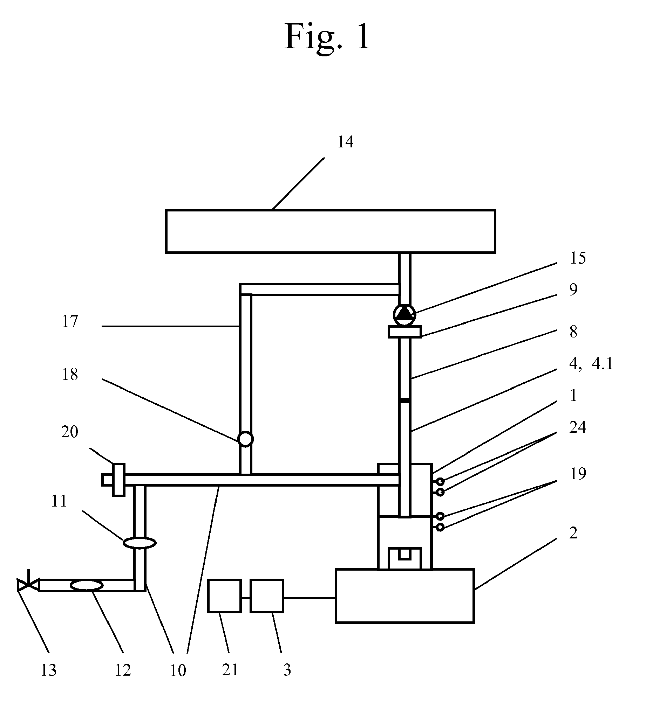

Wie in der Figur 1 dargestellt, besitzt das Kupferrohr 4 innerhalb des Erregergefäßes 1 eine Abzweigung zur Rohrverbindung 10 über ein Überdruckventil 11, einen Druckminderer 12 und ein Absperrventil 13 zu einer Frischwasseranlage. Diese Abzweigung am Kupferrohr 4 zur Rohrverbindung 10 kann auch außerhalb des Erregergefäßes 1 angeordnet sein. An einer weiteren Abzweig der Rohrverbindung 10 ist ein Thermometer 20 angebracht. Wird die Vorrichtung zur Reinigung von Wasseranlagen genutzt, so ist eine Nutzung der Wasseranlage auch bei der Reinigung erstrebenswert. Dazu ist zwischen der Rohrverbindung 10 und dem flexiblen Rohr 8 ein Verbindungsrohr 17 mit einem Elektromagnetventil 18 in Form einer Umgehung des Kupferrohres 4 und des flexiblen Rohres 8 mit dem Rückschlagventil 9 und der Pumpe 15 angeordnet. Über dieses Verbindungsrohr 17 und die Rohrverbindung 10 zur Frischwasseranlage ist die Nutzung der zu reinigenden Wasseranlage 14 durch angeschlossene Verbraucher auch beim Betrieb der erfindungsgemäßen Vorrichtung möglich.

Das Erregergefäß 1 besitzt vorteilhafterweise mindestens eine in einem innerhalb des Erregergefäßes 1 eingeschweißten Glasrohr eingelegte Schmelzsicherung 16 zur Begrenzung einer maximalen Arbeitstemperatur des Erregergefäßes 1. Ein Pegelschalter, gekoppelt mit zwei am Erregergefäß 1 seitlich unterhalb der Schlaufe der Silberantenne 7 angeordneten Kontakten zur Messung der Füllstandshöhe 19 sorgt für einen in Grenzen gehaltenen Wasserstand innerhalb des Erregergefäßes 1. Entsprechende Sicherheitsschaltungen verhindern den Betrieb der Vorrichtung ohne Wasserfüllung des Erregergefäßes 1. In der Glaswandung des Erregergefäßes 1 sind weiterhin Arbeitskontakte 24 z. B. für die Druckmessung und/oder Temperatur möglich.

Die Vorrichtung kann mit einem Display ausgerüstet sein, auf dem eine Anzeige der Betriebsbereitschaft der kompletten Vorrichtung und/oder einzelner Bauteile erfolgt. Hierdurch kann z. B. angezeigt werden, ob einzelne Bauteile der Vorrichtung zu reinigen sind oder aufgrund des Ausfalls eines Bauteils der Vorrichtung, die Vorrichtung zur Reparatur in eine Fachwerkstatt gegeben werden muss.

In den verschiedensten technischen Wasseranlagen kann der Wasserdruck wesentlich höher als in der erfindungsgemäßen Vorrichtung gefordert sein. Für diese Fälle wird nach dem Rückschlagventil 9 eine Pumpe 15 mit einem Wasserbehälter angeschlossen, um den Betriebsdruck wieder erreichen zu können.

Das Verfahren zur Trennung von gelösten und festen Stoffen in wässrigen Lösungen mittels eines Erregergefäßes 1 in Zusammenarbeit mit einem Magnetron 2 arbeitet intervallmäßig, z. B. Füllung des Erregergefäßes in drei Minuten, anschließend folgt eine Arbeitsphase von fünf Sekunden und daran schließt sich eine Ruhephase von anderthalb Sekunde an. Die Intervalle Arbeitsphase und Ruhephase wechseln ständig und werden nur durch Nachfüllphasen unterbrochen, falls der Wasserstand 25 im Erregergefäß 1 bis zum unteren Kontakt zur Messung der Füllstandshöhe 19 absinkt.

Die erfindungsgemäße Vorrichtung kann auch zur Heraustrennung von Eisen aus einer Siliziumcarbid-Schlamm-Emulsion, die als toxische Stoffverbindung nur kostenaufwendig zu entsorgen ist, genutzt werden. Nach dem Herauslösen des Eisens aus der Emulsion kann die Siliziumverbindung wieder im Produktionsprozess eingebunden werden und muss nicht entsorgt werden. Die Heraustrennung des Eisens aus der Siliziumcarbid-Schlamm-Emulsion erfolgt durch mehrere Arbeitsschritte indem die Emulsion einem Pressvorgang zur Entwässerung unterzogen wird, anschließend dieser Emulsion wieder Wasser zugesetzt wird und wiederum anschließend die erfindungsgemäße Vorrichtung an den Behälter der wässrigen Emulsion angeschlossen und der Trennungsvorgang eingeleitet wird.

Die erfindungsgemäße Vorrichtung wird über das flexible Rohr 8 an die Behandlungsanlage 14, Behälter 14 oder Rohrsystem 14 angeschlossen. Anschließend wird das Megatron 2 mittels des elektrischen Schaltsystems 3 eingeschaltet, wodurch das Wasser im Erregergefäß 1 erhitzt und verdampft wird und das Wasser im oberen Bereich des Erregergefäßes 1 durch den Wasserdampf verdrängt wird und sich eine Wasserdampfglocke bildet. Hierbei treten bereits vereinzelt Gasbläschen in das Kupferrohr 4 ein und gelangen über das flexible Rohr 8 in die Behandlungsanlage 14 und beginnen hier mit dem Trennungsprozess Öl-Wasser oder mit dem Abbau der Inkrustation. Wenn der Wasserstand im Erregergefäß 1 das Rohrende des Rohres 4 erreicht, treten nun vermehrt Gasbläschen in das Rohr 4 ein. Durch einen Pegelschalter wird automatisch immer wieder Frischwasser in das Erregergefäß 1 zugeführt, um den Wasserstand kurz über dem Rohrende oder kurz unter dem Rohrende des Rohres 4 zu halten. Hierzu dienen die Kontakte zur Messung der Füllstandshöhe 19 im Erregergefäß 1.

Die Vorrichtung kann auch durch entsprechende Zeitmessgeräte und Zeitschaltgeräte über längere Phasen abgeschaltet werden.

### Zusammenstellung der Bezugszeichen

- 1 -: Erregergefäß
- 2 -: Magnetron
- 3 -: elektrisches Schaltsystem
- 4 -: Metallrohr
- 4.1 -: Gaswasserdampfausgang
- 5 -: Edelstahlgitter
- 6 -: inneres Metallrohr
- 7 -: Metallantenne
- 8 -: flexibles Rohr
- 9 -: Rückschlagventil
- 10 -: Rohrverbindung
- 11 -: Überdruckventil
- 12 -: Druckminderer
- 13 -: Absperrventil
- 14 -: Behandlungsanlage, zu reinigende Behälter, Rohrsystem
- 15 -: Pumpe
- 16 -: Thermosicherung im Erregergefäß
- 17 -: Verbindungsrohr
- 18 -: Elektromagnetventil
- 19 -: Kontakte zur Messung der Füllstandshöhe
- 20 -: Thermometer
- 21 -: PC
- 22 -: Einstülpung
- 23 -: Schirm
- 24 -: Arbeitskontakte
- 25 -: Wasserstand

## Patentansprüche

1. Vorrichtung zur Trennung von gelösten und festen Stoffen in wässrigen Lösungen mittels eines gläsernen mit Wasser gefüllten Erregergefäßes (1), welches mit einem Magnetron (2) zusammenarbeitet, deren Arbeitszentrum innerhalb des Erregergefäßes (1) liegt und an ein elektrisches Schaltsystem (3) angeschlossen ist, welches von einem PC (21) steuerbar ist und das Erregergefäß (1) einen Wassereingang (4) welches gleichzeitig einen Gaswasserdampfausgang (4.1) darstellt und das Erregergefäß (1) in seinem Boden eine Einstülpung (22) besitzt, in die das Magnetron (2) mit seinem Strahlungsausgang hineinragt und dieser Strahlungsausgang mit einem Schirm (23) umgeben ist, der den Zwischenraum zwischen Magnetron (2) und Einstülpung (22) völlig ausfüllt, und das Erregergefäß (1) neben den Kontakten zur Messung der Füllstandshöhe (19) weitere Arbeitskontakte (24) in die Glaswandung des Erregergefäßes (1) eingegossen sind, und der Wassereingang (4) außerhalb des Erregergefäßes (1) mittels eines flexiblen Rohres (8) über ein Rückschlagventil (9) mit einer Behandlungsanlage (14) verbunden ist und außerhalb des Erregergefäßes (1) eine Rohrverbindung (10) über ein Überdruckventil (11), Durckminderer (12) und Absperrventil (13) zu einer Frischwasseranlage endet und zwischen der Rohrverbindung (10) und dem flexiblen Rohr (8) ein Verbindungsrohr (17) mit einem Elektromagnetventil (18) angeordnet ist und zwischen dem PC (21) und den Kontakten (19 und 24) und den Ventilen (9, 11, 13, 18) Steuerleitungen existieren,

2. Vorrichtung nach Anspruch 1,
**dadurch gekennzeichnet,**
**dass** die Kontakte (19 und 24) vergoldet sind.

3. Vorrichtung nach einem der vorhergehenden Ansprüche, **dadurch gekennzeichnet,**
**dass** die Behandlungsanlage (14) ein Analysegerät zur Bestimmung der Zusammensetzung der wässrigen Lösung besitzt und dessen Messergebnisse zum PC übertragbar und vom PC auswertbar sind und über das Schaltsystem (3) eine Steuerung des Magnetrons (2) realisierbar ist.

4. Verfahren zur Trennung von gelösten und festen Stoffen in wässrigen Lösungen mittels eines Erregergefäßes (1) in Zusammenarbeit mit einem Magnetron (2),
**dadurch gekennzeichnet,**
**dass** das Verfahren analog dem Verfahren zur Ablösung von Belägen und Inkrustationen in Wasseranlagen erfolgt und dabei folgender Intervall der Arbeit des Erregergefäßes (1) eingehalten wird:
- Füllung des Erregergefäßes in drei Minuten,
- fünf Sekunden Arbeitsphase und
- anderthalb Sekunde Ruhephase,
bei Nachfüllphasen falls, der Wasserstand im Erregergefäß (1) bis zum unteren Kontakt zur Messung der Füllstandshöhe (19) absinkt.

5. Verfahren zur Trennung von festen Stoffen in Lösungen mittels eines Erregergefäßes (1) in Zusammenarbeit mit einem Magnetron (2),
**dadurch gekennzeichnet,**
**dass** einer Siliziumcarbid-Schlamm-Emulsion einem Pressvorgang zur Entwässerung unterzogen wird, anschließend dieser Emulsion wieder Wasser zugesetzt wird und anschließend die erfindungsgemäße Vorrichtung an den Behälter der wässrigen Emulsion angeschlossen und der Trennungsvorgang eingeleitet wird.
